# EUROPEAN PATENT APPLICATION

(11) **EP 4 648 460 A1**
(43) Date of publication of application: **12.11.2025**
(21) Application number: 24755967.7
(22) Date of filing: 30.01.2024
(51) Int. Cl.: H04W 16/28, H04W 36/00

(54) **BEAM FAILURE RECOVERY METHOD AND APPARATUS**

(30) Priority: 16.02.2023 CN 202310165587
(71) Applicant: Huawei Technologies Co., Ltd., Shenzhen, Guangdong 518129 (CN)
(72) Inventor: YUAN, Shitong, Shenzhen, Guangdong 518129 (CN); CHEN, Lei, Shenzhen, Guangdong 518129 (CN); LIU, Fengwei, Shenzhen, Guangdong 518129 (CN)
(74) Representative: Maiwald GmbH
(86) International application number: PCT/CN2024/074674
(87) International publication number: WO 2024/169593

(57) **Abstract**

Embodiments of this application provide a beam failure recovery method and an apparatus, which may be applied to a scenario in which a terminal device is handed over between serving cells. The method includes: The terminal device receives a handover command from a source network device, where the handover command indicates to hand over the terminal device from a source cell to a target cell; the terminal device determines, in a handover process or after being handed over to the target cell, that beam switching fails; and the terminal device performs beam failure recovery in the source cell, or the terminal device performs beam failure recovery in the target cell. According to this application, beam failure recovery can be performed when a handover failure occurs in a process of implementing cell handover through beam switching.

## Description

This application claims priority to Chinese Patent Application No. 202310165587.0, filed with the China National Intellectual Property Administration on February 16, 2023 and entitled "BEAM FAILURE RECOVERY METHOD AND APPARATUS", which is incorporated herein by reference in its entirety.

### TECHNICAL FIELD

Embodiments of this application relate to the communication field, and more specifically, to a beam failure recovery method and an apparatus.

### BACKGROUND

In a wireless communication system, when a terminal device moves/approaches from a cell to another cell, cell handover needs to be performed to ensure that communication of the terminal device is not interrupted. Currently, a method is known. For example, cell handover may be implemented through beam switching. In a process of implementing beam switching based on a layer 1 (layer, L1) or a layer 2 (layer, L2), the terminal device may obtain a timing advance (timing advance, TA) of a target cell (that is, a cell that provides a service for the terminal device after handover) in a handover preparation phase. Then, after receiving a handover command, the terminal device does not need to initiate a random access procedure to a target network device to which the target cell belongs, thereby reducing a handover delay.

In a process of implementing cell handover through beam switching, a problem of how to perform beam failure recovery when a handover failure occurs needs to be considered.

### SUMMARY

Embodiments of this application provide a beam failure recovery method, to perform beam failure recovery when a handover failure occurs in a process of implementing cell handover through beam switching.

According to a first aspect, a beam failure recovery method is provided. The method may be performed by a terminal device, or may be performed by a component (for example, a chip or a circuit) in the terminal device. This is not limited herein.

The method includes: The terminal device receives a handover command from a source network device, where the handover command indicates to hand over the terminal device from a source cell to a target cell; the terminal device determines, in a handover process or after being handed over to the target cell, that beam switching fails; and the terminal device performs beam failure recovery in the source cell, or the terminal device performs beam failure recovery in the target cell.

Based on the foregoing technical solution, after the terminal device receives the handover command, if the terminal device determines that beam switching fails, the terminal device may perform beam failure recovery in the source cell, so that the terminal device can resume communication with the source network device in the source cell, thereby reducing a possibility that the terminal device loses an air interface connection due to a handover failure. Alternatively, after the terminal device receives the handover command, if the terminal device determines that beam switching fails, the terminal device may perform beam failure recovery in the target cell, thereby improving reliability of cell handover performed by the terminal device, and reducing a possibility that the terminal device loses an air interface connection due to a handover failure.

With reference to the first aspect, in some implementations of the first aspect, that the terminal device determines that beam switching fails includes: The terminal device determines, based on an uplink failure, that beam switching fails; or the terminal device determines, based on a downlink failure, that beam switching fails.

That the terminal device determines, based on the uplink failure, that beam switching fails means that the terminal device determines, by sending an uplink signal to a target network device, that switching fails. For example, if the terminal device receives no response message or acknowledgment information from the target network device after sending the uplink signal to the target network device, the terminal device determines that switching fails. That the terminal device determines, based on the downlink failure, that beam switching fails means that the terminal device determines, by detecting or receiving a downlink signal from the target network device, that switching fails.

With reference to the first aspect, in some implementations of the first aspect, that the terminal device determines, by sending the uplink signal, that beam switching fails includes: if a quantity of times that the terminal device fails to send a scheduling request message to the target network device reaches N, the terminal device determines that beam switching fails, where N is a positive integer; or if a quantity of times that the terminal device fails to send uplink data to the target network device reaches M, the terminal device determines that beam switching fails, where M is a positive integer.

With reference to the first aspect, in some implementations of the first aspect, that the terminal device determines, by receiving downlink, that beam switching fails includes: if the terminal device receives no scheduling information from the target network device within first duration, the terminal device determines that beam switching fails; or if the handover command indicates a first reference signal, and the terminal device detects the first reference signal to determine that signal quality of the first reference signal is lower than a first threshold, or a quantity of times that the terminal device detects the first reference signal for a plurality of times to determine that signal quality of the first reference signal is lower than a first threshold reaches K, the terminal device determines that beam switching fails, where K is a positive integer.

With reference to the first aspect, in some implementations of the first aspect, that the terminal device performs beam failure recovery in the source cell includes: The terminal device sends a beam failure recovery request message to the source network device by using a beam failure recovery resource associated with a first beam, where the first beam is an available beam in a candidate beam of the source cell; or the terminal device sends first indication information to the source network device, where the first indication information indicates that beam switching fails; or the terminal device initiates a random access procedure in the source cell by using a contention-based random access (contention-based random access, CBRA) resource corresponding to a second reference signal, where the second reference signal is determined based on signal quality of at least one reference signal received by the terminal device in the source cell.

The candidate beam of the source cell includes one or more candidate beams.

It should be noted that, in a process in which the terminal device performs random access in the source cell, to enable the source network device to identify the terminal device, the terminal device includes, in a message 3 (message 3, Msg3), a cell radio network temporary identifier (cell radio network temporary identity, C-RNTI) or another specified identifier used by the terminal device in the source cell.

With reference to the first aspect, in some implementations of the first aspect, the beam failure recovery request message includes second indication information, and the second indication information indicates an uplink sending failure or a downlink receiving failure.

With reference to the first aspect, in some implementations of the first aspect, that the terminal device sends the first indication information to the source network device includes: The terminal device sends a dedicated scheduling request message to the source network device, where the dedicated scheduling request message includes the first indication information; or the terminal device sends the first indication information to the source network device by using a first resource, where the first resource is configured by the source network device for the terminal device based on a dedicated scheduling request message or the first resource is preconfigured by the source network device for the terminal device.

With reference to the first aspect, in some implementations of the first aspect, the first resource is further used to report at least one available beam in the target cell; and the method further includes: The terminal device determines at least one available beam in a candidate beam of the target cell, or the terminal device determines the at least one available beam in the target cell.

The candidate beam of the target cell includes one or more candidate beams. The at least one available beam in the target cell is determined by the terminal device from the candidate beam of the target cell, or may be determined by the terminal device from a non-candidate beam of the target cell, or may be determined by the terminal device from the candidate beam and a non-candidate beam of the target cell.

Based on the foregoing technical solution, if the terminal device determines the at least one available beam in the target cell, the terminal device may report the at least one available beam in the target cell to the source network device by using the first resource, so that the source network device sends a new handover command to the terminal device based on the at least one available beam in the target cell, to indicate to hand over the terminal device to the target cell by using a beam in the at least one available beam in the target cell.

With reference to the first aspect, in some implementations of the first aspect, before the terminal device performs beam failure recovery in the source cell, the method further includes: The terminal device determines that there is no available beam in the candidate beam of the target cell, or the terminal device determines that there is no available beam in the target cell.

With reference to the first aspect, in some implementations of the first aspect, before the terminal device performs beam failure recovery in the source cell, the method further includes: The terminal device determines at least one available beam in a candidate beam of the target cell, or the terminal device determines the at least one available beam in the target cell; and after the terminal device performs beam failure recovery in the source cell, the method further includes: The terminal device sends third indication information to the source network device, where the third indication information indicates the at least one available beam.

Based on the foregoing technical solution, if the terminal device determines the at least one available beam in the target cell, the terminal device may report the at least one available beam in the target cell to the source network device by using the third indication information, so that the source network device sends a new handover command to the terminal device based on the at least one available beam in the target cell, to indicate to hand over the terminal device to the target cell by using a beam in the at least one available beam in the target cell.

With reference to the first aspect, in some implementations of the first aspect, the method further includes: The terminal device receives first configuration information from the source network device, where the first configuration information is used to configure the candidate beam of the target cell.

Based on the foregoing technical solution, the source network device configures the candidate beam of the target cell for the terminal device, so that when determining that beam switching fails, the terminal device can perform beam failure recovery based on the candidate beam of the target cell. This helps improve reliability of cell handover performed by the terminal device, and reduce a possibility that the terminal device loses an air interface connection due to a handover failure.

With reference to the first aspect, in some implementations of the first aspect, that the terminal device performs beam failure recovery in the target cell includes: The terminal device sends a beam recovery request message to the target network device by using a beam failure recovery resource of the target cell.

With reference to the first aspect, in some implementations of the first aspect, the beam failure recovery resource of the target cell is associated with a second beam, and the second beam is an available beam in a candidate beam of the target cell, or the second beam is an available beam in the target cell.

With reference to the first aspect, in some implementations of the first aspect, the method further includes: The terminal device receives second configuration information from the source network device, where the second configuration information is used to configure the beam failure recovery resource of the target cell.

Based on the foregoing technical solution, the source network device configures the beam failure recovery resource of the target cell for the terminal device, so that when determining that beam switching fails, the terminal device can perform beam failure recovery based on the beam failure recovery resource of the target cell. This helps improve reliability of cell handover performed by the terminal device, and reduce a possibility that the terminal device loses an air interface connection due to a handover failure.

With reference to the first aspect, in some implementations of the first aspect, the method further includes: The terminal device receives third configuration information from the source network device, where the third configuration information is used to configure at least one of the following: the candidate beam of the target cell or a beam failure recovery resource associated with the candidate beam of the target cell.

Based on the foregoing technical solution, the source network device configures the candidate beam of the target cell for the terminal device, so that when determining that beam switching fails, the terminal device can perform beam failure recovery based on the candidate beam of the target cell. This helps improve reliability of cell handover performed by the terminal device, and reduce a possibility that the terminal device loses an air interface connection due to a handover failure.

With reference to the first aspect, in some implementations of the first aspect, the handover command indicates the terminal device to communicate with the target cell by using a third beam after being handed over from the source cell to the target cell.

According to a second aspect, a communication apparatus is provided, including a transceiver unit and a processing unit. The transceiver unit is configured to receive a handover command from a source network device, where the handover command indicates to hand over a terminal device from a source cell to a target cell; the processing unit is configured to determine, in a handover process or after being handed over to the target cell, that beam switching fails; and the transceiver unit is further configured to perform beam failure recovery in the source cell, or perform beam failure recovery in the target cell.

With reference to the second aspect, in some implementations of the second aspect, the processing unit is specifically configured to: determine, by sending uplink, that beam switching fails; or determine, by receiving downlink, that beam switching fails.

With reference to the second aspect, in some implementations of the second aspect, the processing unit is specifically configured to: if a quantity of times that the terminal device fails to send a scheduling request message to a target network device reaches N, determine that beam switching fails, where N is a positive integer; or if a quantity of times that the terminal device fails to send uplink data to a target network device reaches M, determine that beam switching fails, where M is a positive integer.

With reference to the second aspect, in some implementations of the second aspect, the processing unit is specifically configured to: if the terminal device receives no scheduling information from a target network device within first duration, determine that beam switching fails; or if the handover command indicates a first reference signal, and the terminal device detects the first reference signal to determine that signal quality of the first reference signal is lower than a first threshold, or a quantity of times that the terminal device detects the first reference signal for a plurality of times to determine that signal quality of the first reference signal is lower than a first threshold reaches K, determine that beam switching fails, where K is a positive integer.

With reference to the second aspect, in some implementations of the second aspect, the transceiver unit is specifically configured to: send a beam failure recovery request message to the source network device by using a beam failure recovery resource associated with a first beam, where the first beam is an available beam in a candidate beam of the source cell; or send first indication information to the source network device, where the first indication information indicates that beam switching fails; or initiate a random access procedure in the source cell by using a CBRA resource corresponding to a second reference signal, where the second reference signal is determined based on signal quality of at least one reference signal received by the terminal device in the source cell.

With reference to the second aspect, in some implementations of the second aspect, the beam failure recovery request message includes second indication information, and the second indication information indicates an uplink sending failure or a downlink receiving failure.

With reference to the second aspect, in some implementations of the second aspect, the transceiver unit is specifically configured to: send a dedicated scheduling request message to the source network device, where the dedicated scheduling request message includes the first indication information; or send the first indication information to the source network device by using a first resource, where the first resource is configured by the source network device for the terminal device based on a dedicated scheduling request message.

With reference to the second aspect, in some implementations of the second aspect, the first resource is further used to report at least one available beam in the target cell; and the processing unit is further configured to determine at least one available beam in a candidate beam of the target cell, or determine the at least one available beam in the target cell.

With reference to the second aspect, in some implementations of the second aspect, before the transceiver unit is configured to perform beam failure recovery in the source cell, the processing unit is further configured to: determine that there is no available beam in the candidate beam of the target cell, or determine that there is no available beam in the target cell.

With reference to the second aspect, in some implementations of the second aspect, before the transceiver unit is further configured to perform beam failure recovery in the source cell, the processing unit is further configured to: determine at least one available beam in a candidate beam of the target cell, or determine the at least one available beam in the target cell; and after the transceiver unit is further configured to perform beam failure recovery in the source cell, the transceiver unit is further configured to: send third indication information to the source network device, where the third indication information indicates the at least one available beam.

With reference to the second aspect, in some implementations of the second aspect, the transceiver unit is further configured to receive first configuration information from the source network device, where the first configuration information is used to configure the candidate beam of the target cell.

With reference to the second aspect, in some implementations of the second aspect, the transceiver unit is specifically configured to send, by the terminal device, a beam recovery request message to the target network device by using a beam failure recovery resource of the target cell.

With reference to the second aspect, in some implementations of the second aspect, the beam failure recovery resource of the target cell is associated with a second beam, and the second beam is an available beam in a candidate beam of the target cell, or the second beam is an available beam in the target cell.

With reference to the second aspect, in some implementations of the second aspect, the transceiver unit is further configured to receive second configuration information from the source network device, where the second configuration information is used to configure the beam failure recovery resource of the target cell.

With reference to the second aspect, in some implementations of the second aspect, the transceiver unit is further configured to receive third configuration information from the source network device, where the third configuration information is used to configure at least one of the following: the candidate beam of the target cell or a beam failure recovery resource associated with the candidate beam of the target cell.

With reference to the second aspect, in some implementations of the second aspect, the handover command indicates the terminal device to communicate with the target cell by using a third beam after being handed over from the source cell to the target cell.

According to a third aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect or the possible implementations of the first aspect by using a logic circuit or by executing code instructions.

According to a fourth aspect, a computer-readable storage medium is provided. The computer-readable storage medium stores a computer program or instructions. When the computer program or instructions are executed, the method in any one of the first aspect or the possible implementations of the first aspect is implemented.

According to a fifth aspect, a computer program product including instructions is provided. When the instructions are run, the method in any one of the first aspect or the possible implementations of the first aspect is implemented.

According to a sixth aspect, a computer program is provided. The computer program includes code or instructions. When the code or instructions are run, the method in any one of the first aspect or the possible implementations of the first aspect is implemented.

According to a seventh aspect, a chip system is provided. The chip system includes a processor, and optionally, further includes a memory, configured to implement the method in any one of the first aspect or the possible implementations of the first aspect is implemented. The chip system includes a chip, or includes a chip and another discrete component.

According to an eighth aspect, a communication system is provided, including a terminal device and a source network device, or including a terminal device and a target network device.

The terminal device is configured to implement the method in the implementations of the first aspect. After the terminal device performs beam failure recovery in a source cell, the source network device is configured to communicate with the terminal device. After the terminal device performs beam failure recovery in a target cell, the target network device is configured to communicate with the terminal device.

In a possible design, the communication system further includes another device that interacts with the terminal device, the source network device, or the target network device in the solution provided in embodiments of this application.

### BRIEF DESCRIPTION OF DRAWINGS

FIG. 1 is a diagram of an example of an architecture of a mobile communication system to which an embodiment of this application is applied;
FIG. 2 is a diagram of another example of an architecture of a mobile communication system to which an embodiment of this application is applied;
FIG. 3 is a schematic flowchart of a method according to an embodiment of this application;
FIG. 4 is a diagram of a method according to an embodiment of this application;
FIG. 5 is a diagram of a method according to an embodiment of this application;
FIG. 6 is a schematic flowchart of a method according to another embodiment of this application.
FIG. 7 is a diagram of a communication apparatus 1000 according to an embodiment of this application;
FIG. 8 is a diagram of another communication apparatus 1100 according to an embodiment of this application; and
FIG. 9 is a diagram of a chip system 1200 according to an embodiment of this application.

### DESCRIPTION OF EMBODIMENTS

The following describes the technical solutions in embodiments of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, or a 6th generation (6th generation, 6G) system. The 5G mobile communication system in this application includes a non-standalone (non-standalone, NSA) 5G mobile communication system or a standalone (standalone, SA) 5G mobile communication system. The technical solutions provided in this application may be further applied to a future communication system. Alternatively, the communication system may be a public land mobile communication network (public land mobile network, PLMN) network, a sidelink (sidelink, SL) communication system, a machine to machine (machine to machine, M2M) communication system, an internet of things (internet of things, IoT) communication system, or another communication system.

A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future evolved PLMN or a terminal device in a future internet of vehicles, or the like. This is not limited in embodiments of this application.

As an example rather than a limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to work with other devices such as smartphones, for example, various smart bands or smart jewelry for monitoring physical signs.

In addition, the terminal device in embodiments of this application may alternatively be a terminal device in an IoT system. An IoT is an important part of future development of information technologies. A main technical feature of the IoT is connecting a thing to a network through a communication technology, to implement an intelligent network for human-machine interconnection and thing-thing interconnection. In embodiments of this application, the IoT technology can implement massive connections, deep coverage, and terminal power saving by using, for example, a narrowband (narrowband, NB) technology.

In addition, in embodiments of this application, the terminal device may further include a sensor such as an intelligent printer, a train detector, and a gas station. Main functions of the terminal device include collecting data (some terminal devices), receiving control information and downlink data of a network device, sending an electromagnetic wave, and transmitting uplink data to the network device.

Alternatively, the terminal device may be a module, a chip, or the like in the foregoing device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), a gNB in a 5G system such as an NR system, or a transmission point (TRP or TP), one or a group of antenna panels (including a plurality of antenna panels) of a base station, or a network node that constitutes a gNB or a transmission point, for example, a baseband unit (BBU) or a distributed unit (distributed unit, DU).

In some deployments, the network device in embodiments of this application may be a central unit (central unit, CU) or a distributed unit (distributed unit, DU), or the network device includes a CU and a DU. The gNB may further include an active antenna unit (active antenna unit, AAU). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be further divided into a central unit-control plane (central unit-control plane, CU-CP) and a central unit-user plane (central unit-user plane, CU-UP). Alternatively, the CU-CP and the CU-UP may be deployed on different physical devices. The CU-CP is responsible for a control plane function, and mainly includes an RRC layer and a PDCP control (packet data convergence protocol-control, PDCP-C) layer. The PDCP-C layer is mainly responsible for data encryption and decryption, integrity protection, data transmission, and the like on a control plane. The CU-UP is responsible for a user plane function, and mainly includes a service data adaptation protocol (service data adaptation protocol, SDAP) layer and a PDCP user (packet data convergence protocol-user, PDCP-U) layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an E1 interface). The CU-CP represents the network device and is connected to a core network device through a communication interface (for example, an Ng interface), and is connected to the DU through a communication interface (for example, an F1-C (control plane) interface). The CU-UP is connected to the DU through a communication interface (for example, an F1-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application. For example, the CU or the DU may be configured to have functions of more protocol layers, or the CU or the DU may be configured to have a part of processing functions of protocol layers. For example, a part of functions of the RLC layer and functions of a protocol layer above the RLC layer are set on the CU, and remaining functions of the RLC layer and functions of a protocol layer below the RLC layer are set on the DU. For another example, division into functions of the CU or the DU may alternatively be performed based on service types or other system requirements. For example, division may be performed based on latencies. Functions whose processing time needs to meet a latency requirement are set on the DU, and functions whose processing time does not need to meet the latency requirement are set on the CU.

The DU and a radio unit (radio unit, RU) may operate together to implement functions of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to: implement lower-layer functions of the PHY layer, or implement the lower-layer functions and a radio frequency function. The higher-layer functions of the physical layer may include a part of functions of the physical layer, and the part of functions is closer to the MAC layer. The lower-layer functions of the physical layer may include the other part of functions of the physical layer, and the other part of functions is closer to an intermediate radio frequency side.

The network device mentioned in embodiments of this application may be a device including the CU or the DU, or a device including the CU and the DU, or a device including a control plane CU node (a CU-CP node), a user plane CU node (a CU-UP node), and the DU node.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one (piece) of a, b, or c may represent: a, b, c, a-b, a-c, b-c, or a-b-c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

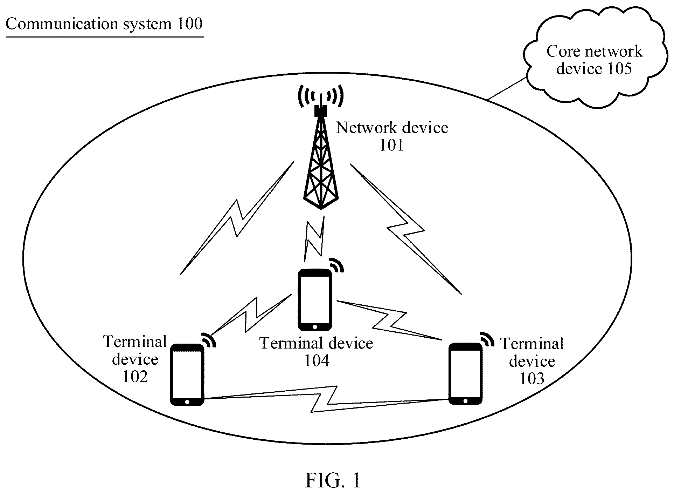

For ease of understanding embodiments of this application, a communication system shown in FIG. 1 is first used as an example to describe in detail a communication system applicable to embodiments of this application.

As shown in FIG. 1, a communication system 100 may include one or more network devices, for example, a network device 101 shown in FIG. 1. The communication system 100 may further include one or more terminal devices, for example, a terminal device 102, a terminal device 103, and a terminal device 104 shown in FIG. 1. The communication system 100 may support a sidelink (sidelink) communication technology, for example, sidelink communication between the terminal device 102 and the terminal device 103, and sidelink communication between the terminal device 102 and the terminal device 104.

It should be understood that FIG. 1 is merely a diagram. The communication system may further include another network device, for example, may further include a core network device 105, and a wireless relay device and a wireless backhaul device that are not shown in FIG. 1. A quantity of network devices and a quantity of terminal devices included in the mobile communication system are not limited in embodiments of this application.

Communication between the network device 101 and the terminal device 102 in the communication system shown in FIG. 1 may alternatively be represented in another form.

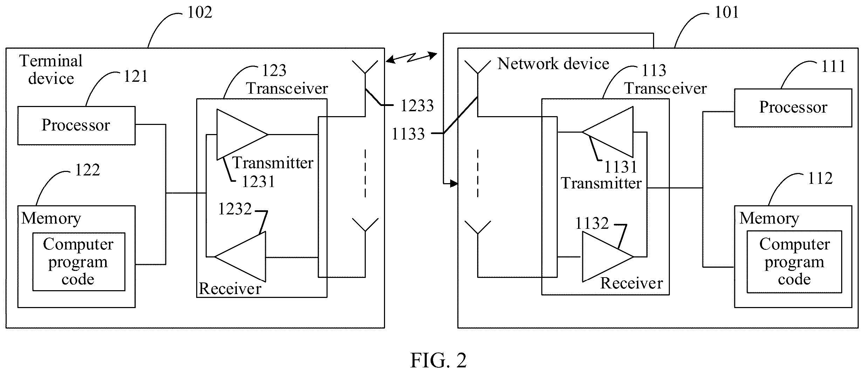

As shown in FIG. 2, the terminal device 102 includes a processor 121, a memory 122, and a transceiver 123. The transceiver 123 includes a transmitter 1231, a receiver 1232, and an antenna 1233. The receiver 1232 may be configured to receive transmission control information through the antenna 1233, and the transmitter 1231 may be configured to send transmission feedback information to the network device 101 through the antenna 1233. The network device 101 includes a processor 111, a memory 112, and a transceiver 113. The transceiver 113 includes a transmitter 1131, a receiver 1132, and an antenna 1133. The transmitter 1131 may be configured to send the transmission control information to the terminal device 102 through the antenna 1133, and the receiver 1132 may be configured to receive, through the antenna 1133, the transmission feedback information sent by the terminal device 102.

To better describe implementations of this application, concepts related to embodiments of this application are first described before embodiments of this application are described.

### 1. Beam (beam)

The beam is a communication resource. The beam in an NR protocol may be embodied as a spatial domain filter (spatial domain filter), or a spatial filter (spatial filter), or a spatial parameter (spatial parameter). A beam for transmitting a signal may be referred to as a transmission beam (transmission beam, Tx beam), or may be referred to as a spatial domain transmit filter (spatial domain transmit filter) or a spatial domain transmit parameter (spatial domain transmit parameter). A beam for receiving a signal may be referred to as a reception beam (reception beam, Rx beam), or may be referred to as a spatial domain receive filter (spatial domain receive filter) or a spatial domain receive parameter (spatial domain receive parameter).

The transmission beam may refer to distribution of signal strength formed in different directions in space after a signal is transmitted through an antenna, and the reception beam may refer to distribution of signal strength in different directions in space of a radio signal received from an antenna.

It should be understood that the foregoing listed representation of the beam in the NR protocol is merely an example, and shall not constitute any limitation on this application. This application does not exclude a possibility that other terms are defined in a future protocol to indicate same or similar meanings.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like. Different beams may be considered as different resources. Same information or different information may be sent by using different beams.

Optionally, a plurality of beams having same communication feature or similar communication features are considered as one beam. One beam may include one or more antenna ports, configured to transmit a data channel, a control channel, a sounding signal, and the like. The one or more antenna ports forming the beam may also be considered as one antenna port set.

As an example, when a low band or an intermediate band is used, a signal may be sent omnidirectionally or at a wide angle. When a high band is used, because of a small carrier wavelength of a high-frequency communication system, antenna arrays including a plurality of antenna elements may be disposed at a transmitting end and a receiving end. The transmitting end sends a signal by using a specific beamforming weight, to enable the sent signal to form a spatially directional beam, and the receiving end receives the signal through the antenna array by using a specific beamforming weight, so that a receive power of the signal at the receiving end can be increased, and a path loss can be avoided.

### 2. Reference signal (reference signal, RS)

The reference signal may also be referred to as a pilot signal (pilot signal), and is a known signal that is provided by a transmitting end device for a receiving device and that is used for channel estimation, channel measurement, channel detection, channel demodulation, or the like. As an example, the reference signal may be applied to a physical layer (physical layer). The reference signal may include a downlink reference signal and an uplink reference signal.

For example, the downlink reference signal includes a primary synchronization signal (primary synchronization signal, PSS), a secondary synchronization signal (secondary synchronization signal, SSS), a demodulation reference signal (demodulation reference signal, DMRS) used for downlink demodulation, a phase noise tracking signal (phase noise tracking reference signal, PTRS) used for downlink, a channel state information reference signal (channel state information reference signal, CSI-RS), a cell signal (cell reference signal, CRS), a fine synchronization signal (time/frequency tracking reference signal, TRS), a positioning signal (positioning RS), or the like. A DMRS used for physical downlink control channel (physical downlink control channel, PDCCH) demodulation may be referred to as a PDCCH DMRS, and a DMRS used for physical downlink shared channel (physical downlink shared channel, PDSCH) demodulation may be referred to as a PDSCH DMRS.

As an example, the uplink reference signal includes a DMRS used for uplink demodulation, a sounding reference signal (sounding reference signal, SRS) used for uplink channel measurement, a PTRS used for uplink, an uplink positioning signal (uplink positioning RS), or the like. A DMRS used for physical uplink control channel (physical uplink control channel, PUCCH) demodulation may be referred to as a PUCCH DMRS, and a DMRS used for physical uplink shared channel (physical uplink shared channel, PUSCH) demodulation may be referred to as a PUSCH DMRS.

In addition to the listed reference signal, the reference signal in this application may alternatively be a sequence signal in a sequence signal set with a good correlation characteristic. The good correlation characteristic means that any sequence in the set has a large autocorrelation peak, and any two sequences in the set have a small cross-correlation peak. To be specific, in embodiments of this application, a sending device may send a plurality of signals, where at least one of the signals is a sequence signal having the good correlation characteristic, for example, a pseudo random (pseudo random) sequence and a Zadoff-chu (Zadoff-chu) sequence. Specifically, correlation means that correlation calculation is performed between one sequence signal and another sequence signal that are in a same set, to obtain a correlation value. Therefore, for the sequence signal having the good correlation characteristic, the receiving device can detect, based on the correlation characteristic, whether the signal exists. In other words, the sequence signal having the correlation characteristic is transmitted without a need to use a detection mechanism such as a pilot. A reference signal (namely, a pilot signal) may be one of signals having good correlation characteristics.

It should be understood that the specific example of the foregoing listed sequence signal is merely an example for description, and this application is not limited thereto. For example, the sequence signal may alternatively be a signal used to carry feedback information (for example, acknowledgment (ACK) information or negative acknowledgment (NACK) information), a resource request signal, or a measurement request signal.

### 3. Quasi-co-location (quasi-co-location, QCL)

The QCL is also referred to as quasi-co-location. A QCL relationship indicates that a plurality of resources have one or more same or similar communication features. For the plurality of resources that have the QCL relationship, a same or similar communication configuration may be used.

For example, if two antenna ports have a QCL relationship, a parameter of one antenna port may be used to determine a parameter of the other antenna port that has the QCL relationship with the antenna port. The parameter may include one or more of the following: a delay spread (delay spread), a Doppler spread (Doppler spread), a Doppler shift (Doppler shift), an average delay (average delay), an average gain, and a spatial receive parameter (spatial Rx parameter). The spatial receive parameter may include one or more of the following: an angle of arrival (angle of arrival, AOA), an average AOA, an AOA spread, an angle of departure (angle of departure, AOD), an average angle of departure AOD, an AOD spread, a receive antenna spatial correlation parameter, a transmit antenna spatial correlation parameter, a transmission beam, a reception beam, and a resource identifier.

As an example, a co-location indication may indicate whether at least two groups of antenna ports have a co-location relationship. For example, the co-location indication indicates whether channel state information reference signals sent by the at least two groups of antenna ports are from a same transmission point, or the co-location indication indicates whether channel state information reference signals sent by the at least two groups of antenna ports are from a same beam group.

In an NR protocol, the QCL relationship may be classified into the following four types based on different parameters:
type A (type A): the Doppler shift, the Doppler spread, the average delay, and the delay spread;
type B (type B): the Doppler shift and the Doppler spread;
type C (type C): the Doppler shift and the average delay; and
type D (type D): the spatial receive parameter.

The QCL in embodiments of this application is the QCL of the type D. Unless otherwise specified in the following, the QCL may be understood as the QCL of the type D, namely, a QCL defined based on the spatial receive parameter.

When the QCL relationship is the QCL relationship of the type D, the QCL relationship may be considered as a spatial QCL. When the antenna ports meet the spatial QCL relationship, a QCL relationship between ports for downlink signals or between ports for uplink signals may be that the two signals have a same AOA or AOD, and is used to indicate that the two signals have a same reception beam or transmission beam. For another example, a QCL relationship between a downlink signal and an uplink signal or between a port for an uplink signal and a port for a downlink signal may be that there is a correspondence between AOAs and AODs of the two signals, or there is a correspondence between AODs and AOAs of the two signals. To be specific, beam reciprocity may be used to determine an uplink transmission beam based on a downlink reception beam, or determine a downlink reception beam based on an uplink transmission beam.

From a perspective of a transmitting end, if two antenna ports are spatially QCLed, it may mean that corresponding beam directions of the two antenna ports are consistent in space. From a perspective of a receiving end, if two antenna ports are spatially QCLed, it may mean that the receiving end can receive, in a same beam direction, signals sent through the two antenna ports.

Signals transmitted on ports having a spatial QCL relationship may further have corresponding beams. The corresponding beam includes at least one of the following: a same reception beam, a same transmission beam, a transmission beam corresponding to a reception beam (corresponding to a reciprocity scenario), and a reception beam corresponding to a transmission beam (corresponding to a reciprocity scenario).

Signals transmitted on ports having a spatial QCL relationship may alternatively be understood as signals received or sent by using a same spatial filter (spatial filter). The spatial filter may be at least one of the following: precoding, a weight of an antenna port, a phase deflection of the antenna port, or an amplitude gain of the antenna port.

Signals transmitted on ports having a spatial QCL relationship may alternatively be understood as having corresponding beam pair links (beam pair links, BPLs). The corresponding BPL includes at least one of the following: a same downlink BPL, a same uplink BPL, an uplink BPL corresponding to a downlink BPL, or a downlink BPL corresponding to an uplink BPL.

Therefore, the spatial receive parameter (namely, the QCL of the type D) may be understood as a parameter used to indicate direction information of a reception beam.

### 4. Transmission configuration indicator (transmission configuration indicator, TCI)

The TCI can indicate a TCI-state (TCI-state). A higher layer in a protocol may configure a QCL by using the TCI-state, and the TCI-state is used to configure a quasi co-location relationship between one or two downlink reference signals and a DMRS of a PDSCH. The TCI-state includes one or two QCL relationships. The QCL represents a consistency relationship between a signal to be received currently and a previously known reference signal. If there is a QCL relationship, a terminal device may receive or send an upcoming signal by using a receive or transmit parameter used for previously receiving or sending a reference signal.

Configuration information of one TCI-state may include one or two reference signal resource identifiers and a QCL type associated with the reference signal resource identifier. When the QCL relationship is configured to be of one of the type (type) A, the type B, or the type C, the terminal device may demodulate a PDCCH or a PDSCH based on an indication of the TCI-state. When the QCL relationship is configured to be of the type D, the terminal device may learn of a transmission beam used by a network device to send a signal, and may further determine, based on the beam pairing relationship determined through the channel measurement, a reception beam used to receive a signal.

The following briefly describes the configuration, activation, and an indication of the TCI-state.

TCI-state configuration: For example, the network device may configure a plurality of TCI-states for the terminal device through radio resource control (radio resource control, RRC) signaling. Each of these TCI-states includes one piece of QCL information (QCL-Info) whose type is typeD. Alternatively, the network device may configure a TCI-state that does not include QCL-info whose type is typeD. This is not limited.

TCI-state activation: After configuring the plurality of TCI-states, the network device may activate eight of the TCI-states by using a media access control-control element (medium access control-control element, MAC-CE). The eight TCI-states one-to-one correspond to eight values of a TCI field in downlink control information (downlink control information, DCI). In other words, the eight TCI-states corresponding to the eight values of the TCI field in the DCI are determined by using the MAC CE.

TCI-state indication: The network device indicates a specific TCI-state by using the TCI field in the DCI. For example, a value of the TCI field in the DCI sent by the network device to the terminal device is 000, which indicates that a TCI-state corresponding to 000 is used for the data transmission beam. A reference signal included in the QCL-Info whose type is typeD in the TCI-state is a channel state information-reference signal (channel state information-reference signal, CSI-RS) whose index is #1, which indicates that a beam used for data transmission is the same as a reception beam corresponding to the CSI-RS whose index is #1. The reception beam corresponding to the CSI-RS whose index is #1 may be determined through a beam measurement procedure, and is known to the terminal device. Therefore, the terminal device may determine, based on a specific value of the TCI field, a beam corresponding to the data transmission beam, to send or receive data by using the corresponding reception beam.

In embodiments of this application, a TCI-state indicated by a handover command is generally a unified (unified) TCI-state (or referred to as a common TCI-state). The unified TCI-state supports downlink (downlink, DL) TCI, uplink (uplink, UL) TCI, and joint (joint) DL/UL TCI. The DL TCI may be used for beam indications for a downlink signal (for example, a PDCCH and/or a PDSCH) and for all component carriers (component carriers, CCs) in a frequency band or frequency band group. The UL TCI may be used for beam indications for an uplink signal (for example, a PUCCH, a PUSCH, and/or an SRS) and for all CCs in a frequency band or frequency band group. The joint DL/UL TCI may be used for beam indications for uplink and downlink signals (for example, a PDCCH, a PDSCH, a PUCCH, a PUSCH, and/or an SRS) and for all CCs in a frequency band or frequency band group.

### 5. Control resource set (control resource set, CORESET)

The CORESET is a resource set used to transmit downlink control information, and may also be referred to as a control resource area or a physical downlink control channel resource set. Each CORESET may be a set of a group of resource element groups (resource element group, REG). The REG is a basic unit for allocating physical resources through downlink control signaling, and is used to define a mapping from downlink control signaling to REs. For example, one REG may include four consecutive resource elements (resource elements, REs) of a non-reference signal (reference signal, RS) in frequency domain. It should be understood that the REG is merely a unit used for resource allocation, and should not constitute any limitation on this application. This application does not exclude that a new resource allocation unit is defined in a future protocol to implement a same or similar function.

For a network device, the CORESET may be understood as a set of resources that may be used to send a PDCCH. For a terminal device, a resource corresponding to a PDCCH search space of each terminal device belongs to the CORESET. In other words, the network device may determine, in the CORESET, the resource used to send the PDCCH, and the terminal device may determine the PDCCH search space based on the CORESET. The network device may configure one or more CORESETs for the terminal device, to transmit different types of PDCCHs.

The CORESET may include a time-frequency resource. For example, the time-frequency resource may be a bandwidth segment or one or more sub-bands in frequency domain. The time-frequency resource may be one or more symbols in time domain. A control resource set may be consecutive or inconsecutive resource units in time-frequency domain, for example, consecutive resource blocks (resource block, RB) or inconsecutive RBs.

The CORESET may be configured, for example, by using a ControlResourceSet information element (control resource set information element) in a higher-layer parameter. The higher-layer parameter may include, for example, an identifier (identifier, ID) of the CORESET, a frequency domain resource, and a quantity of symbols included in duration (duration). A specific parameter used to configure the CORESET is not limited in this application.

6. Common beam: is a same beam used for a plurality of channels, a plurality of types of channels, a plurality of reference signals, and/or a plurality of types of reference signals. The channel includes but is not limited to at least one of: a PDCCH, a PDSCH, a PUCCH, a PUSCH, a physical random access channel (physical random access channel, PRACH). The reference signal includes but is not limited to at least one of a synchronization signal block (synchronization signal and PBCH block, SS/PBCH, or SSB for short), a CSI-RS, a DMRS, a phase tracking reference signal (phase tracking reference signal, PTRS), a time-frequency tracking reference signal (tracking reference signal, TRS), an SRS, and the like.

Joint (joint) common beam: is for transmission of at least one uplink and downlink channel or at least one uplink and downlink reference signal, for example, a PDCCH, a PDSCH, a PUCCH, and a PUSCH. The joint common beam may also be referred to as an uplink and downlink common beam.

Uplink common beam: is for transmission of a plurality of uplink channels, and/or transmission of a plurality of types of uplink channels, and/or transmission of one or more uplink reference signals, for example, a PUCCH, a PUSCH, and an SRS.

Downlink common beam: is for transmission of a plurality of downlink channels, and/or transmission of a plurality of types of downlink channels, and/or transmission of one or more downlink reference signals, for example, a PDCCH, a PDSCH, and a CSI-RS.

Form of the common beam: The common beam may have a newly defined structure (different from an existing TCI-state). For example, the common beam includes beam indication related information, including but not limited to one or more of the following: a common beam identifier (identifier, ID), a logical cell identifier (cell ID), a physical cell identifier, a bandwidth part identifier, a reference signal resource for determining a beam, a QCL type, an uplink power control related parameter (such as a path loss measurement reference signal resource, p0, or a closed loop index (closed Loop Index)), and an identifier of a path loss reference signal.

Application scope of the common beam: The common beam may be cell-specific, that is, one common beam is for transmission of a plurality of channels in one cell. The common beam may be bandwidth part (bandwidth path, BWP)-specific, and is for transmission of a plurality of beams in one BWP. The common beam may also be cross-cell, that is, is for transmission of a plurality of channels of a plurality of cells. The plurality of cells may be a plurality of cells in one band (band). The plurality of cells may also be a plurality of inter-band cells.

In a wireless communication system, when a terminal device moves/approaches from a cell to another cell, cell handover needs to be performed to ensure that communication of the terminal device is not interrupted. Currently, a method is known. For example, cell handover may be implemented through beam switching. Beam switching may be implemented through a layer 1 (layer 1, L1) (that is, a physical layer (physical, PHY)) or a layer 2 (layer 2, L2) (that is, a medium access control (medium access control, MAC) layer).

In a process of implementing beam switching based on L1 or L2, the terminal device may obtain a timing advance (timing advance, TA) of a target cell (that is, a cell that provides a service for the terminal device after handover) in a handover preparation phase. Then, after receiving a handover command, the terminal device does not need to initiate a random access procedure to a network device to which the target cell belongs, thereby reducing a handover delay.

In a process of implementing cell handover through beam switching, a problem of how to perform beam failure recovery when a handover failure occurs needs to be considered.

In view of this, an embodiment of this application provides a beam failure recovery method, to perform beam failure recovery when a handover failure occurs in a process of implementing cell handover through beam switching.

It should be understood that, for ease of understanding and description, the following describes in detail the method provided in embodiments of this application through interaction between a terminal device and a network device as an example. However, this should not constitute any limitation on an execution body of the method provided in this application. For example, a terminal device shown in the following embodiments may be replaced with a component (for example, a circuit, a chip, or a chip system) configured in the terminal device, and the terminal device shown in the following may also be replaced with a pan-IoT device. A network device shown in the following embodiments may also be replaced with a component (such as a chip or a chip system) configured in the network device.

A specific structure of an execution body of the method provided in embodiments of this application is not specifically limited in the following embodiments, provided that a program that records code of the method in embodiments of this application can be run to perform communication according to the method provided in embodiments of this application. For example, the method provided in embodiments of this application may be performed by the terminal device or the network device, or a functional module that can invoke and execute the program in the terminal device or the network device.

A threshold (for example, a first threshold, a second threshold, a threshold #1, or a threshold #2) mentioned in the following embodiments may be a threshold predefined in a protocol, or may be a threshold indicated by a source network device to the terminal device. This is not limited in embodiments of this application.

Duration (for example, first duration, duration #1, or duration #2) mentioned in the following embodiments may be duration predefined in a protocol, or may be duration indicated by a source network device to the terminal device. This is not limited in embodiments of this application. A unit of the duration may be a millisecond (ms), a slot (slot), a subframe (subframe), a frame (frame), or a period number.

Signal quality of a reference signal (for example, a first reference signal, a second reference signal, or a third reference signal) mentioned in the following embodiments may include at least one of the following: reference signal received power (reference signal received power, RSRP), reference signal received quality (reference signal received quality, RSRQ), and signal to interference plus noise ratio (signal to interference plus noise ratio, SINR).

A target network device and a source network device mentioned in the following embodiments are different network devices, or the target network device and the source network device are a same network device. This is not limited in embodiments of this application. A source network device or a target network device in the following embodiments may be a gNB, a CU (CU-CP or CU-UP), or a DU, or include a CU and a DU.

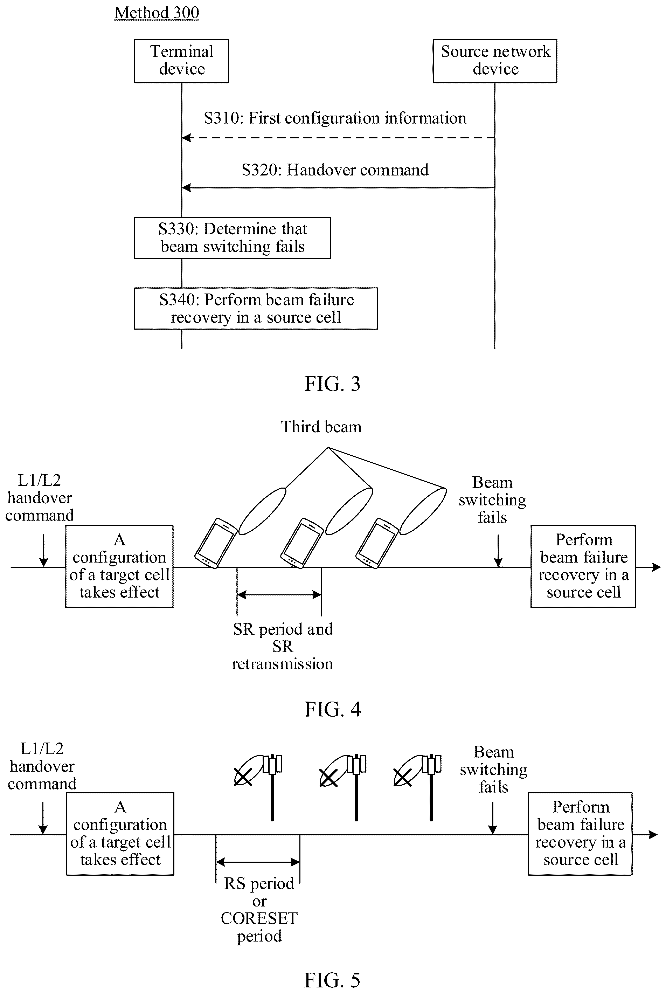

FIG. 3 is a schematic flowchart of a beam failure recovery method according to an embodiment of this application. As shown in FIG. 3, a method 300 may include the following steps.

S310: A source network device sends first configuration information to a terminal device.

Correspondingly, the terminal device receives the first configuration information from the source network device.

The first configuration information is used to configure a candidate beam of a target cell, and the candidate beam of the target cell includes one or more beams. In a possible implementation, the first configuration information is included in a cell configuration corresponding to the target cell, for example, a cell group configuration (CellGroupConfig) or a serving cell configuration (ServingCellConfig) corresponding to the target cell. Alternatively, in another possible implementation, the first configuration information is included in a cell configuration corresponding to a current serving cell (that is, a source cell).

The source network device is a network device to which the source cell belongs, and the source cell is a cell that provides a service for the terminal device before the terminal device is handed over. The target cell is a cell that provides a service for the terminal device after the terminal device is handed over.

It should be noted that S310 is an optional step. For example, if the source network device sends the first configuration information to the terminal device before the method 300 is performed, S310 may not be performed in the method 300. For another example, if the candidate beam of the target cell is preconfigured in the terminal device, S310 may not be performed in the method 300. For still another example, if the source network device determines not to configure the candidate beam of the target cell for the terminal device, S310 may not be performed in the method 300.

S320: The source network device sends a handover command to the terminal device.

Correspondingly, the terminal device receives the handover command from the source network device.

The handover command indicates to hand over the terminal device from the source cell to the target cell. For example, the source network device sends the handover command to the terminal device through L1 or L2.

In a possible implementation, the handover command further indicates a third beam in the target cell, and the third beam is a beam used by the terminal device to communicate with a target network device after the terminal device is handed over to the target cell. The target network device is a network device to which the target cell belongs. When the handover command further indicates a third beam, it is equivalent to that the handover command indicates to hand over the terminal device from the source cell to the target cell by using the third beam of the target cell. In other words, when the handover command indicates a third beam, it is equivalent to that the handover command indicates to hand over the terminal device from the source cell to the target cell by using the third beam that is used to hand over the terminal device to the target cell. Alternatively, when the handover command indicates a third beam, it is equivalent to that the handover command indicates the terminal device to communicate with a target network device by using the third beam.

A manner in which the handover command indicates the third beam is not limited in this embodiment of this application.

For example, the handover command may include a TCI-state indication, a TCI-state indicated by the TCI-state indication includes information whose identifier is QCL Type-D, and the information whose identifier is QCL Type-D is used to determine a spatial filter of a first reference signal that has a quasi co-location relationship with the third beam. Correspondingly, the terminal device may determine the TCI-state based on the TCI-state indication included in the handover command, to determine a spatial receive parameter of the first reference signal, and determine the third beam based on the spatial filter of the first reference signal.

When the handover command includes the TCI-state indication, it may be understood that the handover command further indicates the first reference signal.

It should be noted that, if the TCI-state indicated by the TCI-state indication may be a joint uplink-downlink TCI-state, the first reference signal determined based on the QCL Type-D information included in the TCI-state includes a downlink reference signal and an uplink reference signal, and then the third beam determined based on the first reference signal includes an uplink beam and a downlink beam. If the TCI-state indicated by the TCI-state indication is a downlink TCI-state, the first reference signal determined based on the QCL Type-D information included in the TCI-state includes a downlink reference signal, and then the third beam determined based on the first reference signal includes a downlink beam. If the TCI-state indicated by the TCI-state indication is an uplink TCI-state, the first reference signal determined based on the QCL Type-D information included in the TCI-state includes an uplink reference signal, and then the third beam determined based on the first reference signal includes an uplink beam. If the TCI-state indicated by the TCI-state indication includes an uplink TCI-state and a downlink TCI-state, the first reference signal determined based on the QCL Type-D information included in the TCI-state includes an uplink reference signal and a downlink reference signal, and then the third beam determined based on the first reference signal includes an uplink beam and a downlink beam.

For example, the handover command may include an index of the first reference signal or an identifier of the first reference signal. Correspondingly, the terminal device may determine the first reference signal based on the index or the identifier included in the handover command, and then determine the third beam based on the spatial receive parameter used to receive the first reference signal.

When the handover command includes the index of the first reference signal or the identifier of the first reference signal, it may be understood that the handover command further indicates the first reference signal.

S330: The terminal device determines that beam switching fails.

For example, in a process in which the terminal device is handed over from the source cell to the target cell, the terminal device determines that beam switching fails; or after the terminal device is handed over to the target cell, the terminal device determines that beam switching fails; or within preset duration after the terminal device is handed over to the target cell, the terminal device determines that beam switching fails.

It should be noted that the beam switching failure mentioned in this embodiment of this application may be replaced with a handover failure, a cell handover failure, a handover failure determined through L1/L2, or the like.

For example, in a time period from a time at which the terminal device receives the handover command to a time at which the terminal device performs one successful communication procedure with the target network device, if the terminal device determines that beam switching fails, it may be considered that, in the process in which the terminal device is handed over from the source cell to the target cell, the terminal device determines that beam switching fails.

For another example, after the terminal device receives the handover command, if the terminal device determines that beam switching fails, it may be considered that, after the terminal device is handed over to the target cell, the terminal device determines that beam switching fails.

For another example, after the terminal device receives the handover command and performs one successful communication procedure with the target network device, if the terminal device determines that a beam fails, it may be considered that, after the terminal device is handed over to the target cell, the terminal device determines that beam switching fails.

It should be understood that, in a manner of implementing beam switching based on L1 or L2, the terminal device may obtain a TA of the target cell. Then, after receiving the handover command, the terminal device may communicate, based on the TA of the target cell, with the target network device to which the target cell belongs. Therefore, that the terminal device determines, after receiving the handover command, that beam switching fails may be understood as that the terminal device determines that a beam failure occurs in the target cell.

The TA of the target cell is obtained by the terminal device in a handover preparation phase. For example, a random access response message received by the terminal device includes the TA of the target cell. Alternatively, the TA of the target cell is obtained by the terminal device from the handover command.

The following describes a manner in which the terminal device determines that beam switching fails.

For example, that the terminal device determines that beam switching fails includes: The terminal device determines, based on an uplink failure, that beam switching fails; or the terminal device determines, based on a downlink failure, that beam switching fails.

That the terminal device determines, based on the uplink failure, that beam switching fails means that the terminal device determines, by sending an uplink signal to the target network device, that switching fails. The terminal device determines, based on the uplink failure, that beam switching fails in one or more of the following manners.

### Manner 1:

If a quantity of times that the terminal device fails to send an uplink message (for example, a scheduling request (scheduling request, SR) message) to the target network device reaches N, or after the terminal device sends an uplink message to the target network device, the terminal device receives no message (for example, a response message, a scheduling indication message, or an acknowledgment message) from the target network device within duration #1, the terminal device determines that beam switching fails. N is a positive integer, and a value of N is predefined in a protocol, or a value of N is indicated by the source network device to the terminal device. For example, the value of N is 1, or the value of N is 3. This is not limited in embodiments of this application.

For example, if the terminal device sends the uplink message to the target network device by using one of the following resources: a dedicated uplink control channel resource, a dedicated SR scheduling request resource, a preconfigured PUCCH resource, or another type of PUCCH resource.

As described above, in a process of implementing beam switching based on L1 or L2, the terminal device may obtain the TA of the target cell. Then, after receiving the handover command, the terminal device may send the uplink message to the target network device based on the obtained TA of the target cell.

It may be understood that, after the terminal device sends the uplink message to the target network device, if the terminal device receives no message (for example, a response message, a scheduling indication, or an acknowledgment message) from the target network device, the terminal device determines that the terminal device fails to send the uplink message to the target network device. That the quantity of times that the terminal device fails to send the uplink message to the target network device reaches N means that the terminal device still receives no message from the target network device after sending the uplink message to the target network device for N times.

If the handover command received by the terminal device further indicates the third beam of the target cell in S320, and the third beam includes the uplink beam, the terminal device sends the uplink message to the target network device by using the uplink beam included in the third beam.

### Manner 2:

If a quantity of times that the terminal device fails to send uplink data to the target network device reaches M, or after the terminal device sends uplink data to the target network device, the terminal device receives no message (for example, a response message, a scheduling indication message, or an acknowledgment message) from the target network device within duration #2, the terminal device determines that beam switching fails. M is a positive integer, and a value of M is predefined in a protocol, or a value of M is indicated by the source network device to the network device. For example, the value of M is 1, or the value of M is 3. This is not limited in embodiments of this application.

A manner in which the terminal device sends the uplink data to the target network device is not limited. For example, if the terminal device preconfigures an uplink grant resource (configured grant PUSCH) or another type of PUSCH resource used to send the uplink data to the target network device, after receiving the handover command, the terminal device may send the uplink data to the target network device by using the preconfigured uplink grant resource or the preconfigured PUSCH resource. For another example, after receiving the handover command, the terminal device first sends a scheduling request message to the target network device. Then, after receiving a scheduling indication that is sent by the target network device to the terminal device based on the scheduling request message, the terminal device sends the uplink data to the target network device based on an uplink resource indicated by the scheduling indication.

If the handover command received by the terminal device further indicates the third beam of the target cell in S320, and the third beam includes the uplink beam, the terminal device sends the uplink data to the target network device by using the uplink beam included in the third beam.

### Manner 3:

The terminal device determines, based on a timer associated with a timing advance, whether beam switching fails, and if the timer expires, the terminal device determines that beam switching fails. The timer associated with the timing advance may determine whether an uplink TA currently used for uplink transmission is valid. The timer may be associated with a cell or a cell identifier, or associated with a timing advance group (timing advance group, TAG), or associated with a TA value. A start time point of the timer may be a time point after the terminal device sends a PRACH preamble, or may be a time point after the terminal device obtains a PRACH random access response (random access response, RAR), or may be a time point after the terminal device receives another message used to determine random access success channel (random access channel, RACH) success, or may be a time point after the terminal device sends an SRS to the target network device, or may be a time point after a latest measurement on a downlink receiving time difference (that is, a time difference of arrival of downlink reference signals between the source cell and the target cell).

It should be understood that the terminal device may further determine, with reference to a plurality of manners in the foregoing manner 1 to manner 3, whether beam switching fails. For example, with reference to the manner 1 and the manner 3, if the quantity of times that the terminal device fails to send the scheduling request message to the target network device reaches N, and the timer associated with the timing advance expires, the terminal device determines that beam switching fails. For another example, with reference to the manner 2 and the manner 3, if the terminal device receives no message (for example, a response message, a scheduling indication, or an acknowledgment message) from the target network device within duration #2 after sending the uplink data to the target network device, and the timer associated with the timing advance expires, the terminal device determines that beam switching fails.

That the terminal device determines, based on the downlink failure, that beam switching fails means that the terminal device determines, by detecting or receiving a downlink signal from the target network device, that switching fails. The terminal device determines, based on the downlink failure, that beam switching fails in one or more of the following manners.

### Manner a:

If the terminal device receives no scheduling information from the target network device within first duration, and the scheduling information indicates the terminal device to perform uplink transmission or downlink reception, the terminal device determines that beam switching fails.

Specifically, if the terminal device receives no scheduling information from the target network device after the first duration, where the first duration starts from a moment at which the terminal device receives the handover command, or a moment at which the handover command takes effect, or a moment at which a configuration of the target cell takes effect, the terminal device determines that beam switching fails.

After receiving the handover command, the terminal device may detect the scheduling information from the target network device on a specified CORESET of the target cell. The specified CORESET is a CORESET that is used to receive a first piece of scheduling information from the target network device after the terminal device is handed over from the source cell to the target cell. An identifier of the specified CORESET may be preconfigured, or may be indicated by the handover command, or may be predefined. For example, the CORESET specified by default is a CORESET #0, a CORESET #1, or the like. Alternatively, after receiving the handover command, the terminal device may detect the scheduling information from the target network device on any CORESET of the target cell.

### Manner b:

If the handover command indicates the first reference signal, and the terminal device determines, by measuring the first reference signal, that signal quality of the first reference signal is lower than a first threshold, or that signal quality of the first reference signal is lower than a first threshold for K consecutive times, or that a quantity of times that signal quality of the first reference signal is lower than a first threshold within duration #3 reaches K, the terminal device determines that beam switching fails. K is a positive integer, and a value of K is predefined in a protocol, or a value of K is indicated by the source network device to the terminal device. For example, the value of K is 2, or the value of K is 3. This is not limited in embodiments of this application. For a manner in which the handover command indicates the first reference signal, refer to the foregoing description in S320.

That the quantity of times that the signal quality of the first reference signal is lower than the first threshold reaches K means that the signal quality of the first reference signal is lower than the first threshold in each of K first reference signal periods.

That the signal quality of the first reference signal is lower than the first threshold may be replaced with that a hypothetical PDCCH block error rate (block error rate, BLER) (hypothetical PDCCH BLER) is lower than a threshold #5.

### Manner c:

If the handover command indicates the third beam, and the terminal device determines, by measuring a third reference signal, that signal quality of the third reference signal is lower than a second threshold, or that signal quality of the third reference signal is lower than a second threshold for L consecutive times, or that a quantity of times that signal quality of the third reference signal is lower than a second threshold within duration #4 reaches L, the terminal device determines that beam switching fails. L is a positive integer, and a value of L is predefined in a protocol, or a value of L is indicated by the source network device to the terminal device. For example, the value of L is 2, or the value of L is 3. This is not limited in embodiments of this application. The third reference signal is a reference signal that is received by the terminal device from the target network device by using the third beam, or the third reference signal is a preconfigured periodic reference signal used to detect whether a beam failure occurs on the third beam.

That the quantity of times that the signal quality of the third reference signal is lower than the second threshold reaches L means that the signal quality of the third reference signal is lower than the second threshold in each of L third reference signal periods.

That the signal quality of the third reference signal is lower than the second threshold may be replaced with that a hypothetical physical downlink control channel (hypothetical PDCCH BLER) is lower than a threshold #6.

### Manner d

The terminal device measures a periodic reference signal that has a QCL relationship with a DMRS signal of a specified CORESET or a DMRS signal of any CORESET. If it is detected that channel quality of the periodic reference signal is lower than a fourth threshold for S consecutive times (that is, after S reference signal periods), or a quantity of times that signal quality of the periodic reference signal is lower than a fourth threshold within duration #5 reaches T, the terminal device determines that beam switching fails. S is a positive integer, and a value of S is predefined in a protocol, or a value of S is indicated by the source network device to the terminal device. For example, the value of S is 2, or the value of S is 3.

That the signal quality of the periodic reference signal is lower than the fourth threshold may be replaced with that a hypothetical physical downlink control channel (hypothetical PDCCH BLER) is lower than a threshold #7.

### Manner e

The terminal device measures at least one preconfigured reference signal. If it is detected that channel quality of the at least one reference signal is lower than a fifth threshold for Q consecutive times (that is, after Q reference signal periods), or a quantity of times that signal quality of the at least one reference signal is lower than a fifth threshold within duration #6 reaches Q, the terminal device determines that beam switching fails. Q is a positive integer, and a value of Q is predefined in a protocol, or a value of Q is indicated by the source network device to the terminal device. For example, the value of Q is 2, or the value of Q is 3.

The at least one reference signal preconfigured by the terminal device may be preconfigured before handover, and configuration information of the at least one reference signal may be included in a cell group configuration (cellgroupconfig) corresponding to the target cell. It may be understood that, after the handover command takes effect or the configuration of the target cell takes effect, the terminal device may determine, by measuring the at least one preconfigured reference signal, whether beam switching fails.

That the signal quality of the at least one reference signal is lower than the fifth threshold may be replaced with that a hypothetical physical downlink control channel (hypothetical PDCCH BLER) is lower than a threshold #8.

### Manner f

If the handover command does not indicate the third beam and the first reference signal, the terminal device determines, by measuring a fourth reference signal, that signal quality of the fourth reference signal is lower than a third threshold, or that signal quality of the fourth reference signal is lower than a third threshold for P consecutive times, or that a quantity of times that signal quality of the fourth reference signal is lower than a third threshold within duration #7 reaches P, the terminal device determines that beam switching fails. P is a positive integer, and a value of P is predefined in a protocol, or a value of P is indicated by the source network device to the terminal device. For example, the value of P is 2, or the value of P is 3. This is not limited in embodiments of this application. The fourth reference signal is a reference signal that is from the target network device and that is received by the terminal device by using a default beam. For example, the default beam is a beam used by the terminal device to send a random access channel (random access channel, RACH) to the target network device in the handover preparation phase. Alternatively, the fourth reference signal is an SSB used by the terminal device to obtain the TA of the target cell. Alternatively, the fourth reference signal is a periodic reference signal that has a QCL relationship with a DMRS signal of a specified CORESET or a DMRS signal of any CORESET.

That the quantity of times that the signal quality of the fourth reference signal is lower than the third threshold reaches P means that the signal quality of the fourth reference signal is lower than the third threshold in each of P fourth reference signal periods.

That the signal quality of the fourth reference signal is lower than the third threshold may be replaced with that a hypothetical physical downlink control channel (hypothetical PDCCH BLER) is lower than a threshold #9.

It should be understood that the terminal device may further determine, with reference to a plurality of manners in the foregoing manner a to manner f, whether beam switching fails. For example, with reference to the manner b and the manner f, if the handover command indicates the first reference signal, the terminal device determines, in the manner b, whether beam switching fails; or if the handover command does not indicate the first reference signal, the terminal device determines, in the manner f, whether beam switching fails. For another example, with reference to the manner b and the manner d, the terminal device may determine, by measuring the first reference signal and/or the periodic reference signal that has the QCL relationship with the DMRS signal of the specified CORESET or the DMRS signal of any CORESET, whether beam switching fails.

S340: The terminal device performs beam failure recovery in the source cell.

In a possible implementation, after determining that beam switching fails, the terminal device directly performs beam failure recovery in the source cell.

Optionally, if the terminal device configures or preconfigures the candidate beam of the target cell, before performing beam failure recovery in the source cell, the terminal device may further sequentially first determine whether each candidate beam in the candidate beam of the target cell is available. In this implementation, regardless of whether there is an available beam in the candidate beam of the target cell, the terminal device performs beam failure recovery in the source cell.

A candidate beam #1 in the candidate beam of the target cell is used as an example to describe a manner in which the terminal device determines whether the candidate beam #1 is available. For example, the terminal device may detect a reference signal #1 received from the target network device by using the candidate beam #1. If signal quality of the reference signal #1 is lower than a threshold #1, or if a quantity of times that signal quality of the reference signal #1 is lower than a threshold #1 reaches n, the terminal device determines that the candidate beam #1 is unavailable. If signal quality of the reference signal #1 is not lower than a threshold #1, the terminal device determines that the candidate beam #1 is available. For another example, the terminal device may detect signal quality of a reference signal #2. If signal quality of the reference signal #2 is lower than a threshold #2, or a quantity of times that signal quality of the reference signal #2 is lower than a threshold #2 reaches m, the terminal device determines that the candidate beam #1 is unavailable. If signal quality of the reference signal #2 is not lower than a threshold #2, the terminal device determines that the candidate beam #1 is available. The reference signal #2 is a preconfigured reference signal used to detect whether the candidate beam #1 is available. n and m are both positive integers.

Optionally, before the terminal device performs beam failure recovery in the source cell, the terminal device may further determine whether there is an available beam in the target cell. In this implementation, regardless of whether there is an available beam in the target cell, the terminal device performs beam failure recovery in the source cell. The terminal device may determine whether there is an available beam in the target cell, and may determine whether there is an available beam in the candidate beam of the target cell, or determine whether there is an available beam in a non-candidate beam of the target cell, or determine whether there is an available beam in the candidate beam and a non-candidate beam of the target cell.

For example, the terminal device may detect, within predefined time, signal quality of at least one reference signal received from the target network device. If the signal quality of the at least one reference signal from the target network device is lower than a threshold #3, the terminal device determines that there is no available beam in the target cell. If signal quality of one or more of the at least one reference signal from the target network device is not lower than a threshold #3, the terminal device determines that there is an available beam in the target cell, where the available beam is a beam corresponding to a reference signal whose signal quality is not lower than the threshold #3. The threshold #3 is predefined in a protocol, or is indicated by the source network device to the terminal device.

In a possible implementation, when the terminal device determines that beam switching fails and there is no available beam in the candidate beam of the target cell, the terminal device performs beam failure recovery in the source cell.

If the terminal device configures or preconfigures the candidate beam of the target cell, after determining that beam switching fails, the terminal device may sequentially first determine whether each candidate beam in the candidate beam of the target cell is available. If each candidate beam in the candidate beam of the target cell is unavailable, the terminal device performs beam failure recovery in the source cell.

In a possible implementation, when the terminal device determines that beam switching fails and there is no available beam in the target cell, the terminal device performs beam failure recovery in the source cell.

In a possible implementation, if the terminal device determines that beam switching fails, and the terminal device does not configure a beam failure recovery resource associated with the candidate beam of the target cell, or the terminal device does not configure a beam failure recovery resource associated with the available beam in the target cell, the terminal device performs beam failure recovery in the source cell.

In a possible implementation, if the terminal device determines that beam switching fails, and the terminal device configures a beam failure recovery resource associated with a candidate beam of the source cell, the terminal device performs beam failure recovery in the source cell. The candidate beam of the source cell includes one or more candidate beams.

The following describes a manner in which the terminal device performs beam failure recovery in the source cell.

For example, the manner in which the terminal device performs beam failure recovery in the source cell includes: The terminal device sends a beam failure recovery request (beam failure recovery request, BFRQ) message to the source network device by using a beam failure recovery (beam failure recovery, BFR) resource associated with a first beam.

Correspondingly, after receiving the beam failure request message by using the BFR resource associated with the first beam, the source network device may determine the first beam, and then the source network device may send a beam failure recovery response message to the terminal device by using the first beam. After detecting the beam failure recovery response message from the source network device, the terminal device may continue to communicate with the source network device by using the first beam.

The first beam is an available beam in the candidate beam of the source cell. If the candidate beam of the source cell is configured for the terminal device, the terminal device may determine one or more available beams from the candidate beam of the source cell, and determine the first beam from the one or more available beams. For a manner in which the terminal device determines whether the candidate beam of the source cell is available, refer to the manner in which the terminal device determines whether the candidate beam of the target cell is available.

It may be understood that, after the terminal device receives the handover command from the source network device, the terminal device still retains the BFR resource associated with the candidate beam of the source cell, and the terminal device may send the beam failure recovery request message to the source network device by using the BFR resource associated with the first beam.

Optionally, the beam failure recovery request message includes second indication information, and the second indication information indicates an uplink sending failure or a downlink receiving failure, or the second indication information indicates that a cause of the beam switching failure is an uplink sending failure or a downlink receiving failure. Correspondingly, the source network device may determine, based on the second indication information, that beam switching of the terminal device fails. Further, the source network device may further send a new handover command to the terminal device, to indicate to hand over the terminal device to the target cell by using another beam different from the third beam.

Optionally, if the terminal device determines at least one available beam in the candidate beam of the target cell, or determines at least one available beam in the target cell (the at least one available beam in the target cell is determined by the terminal device from the candidate beam of the target cell, or is determined by the terminal device from the non-candidate beam of the target cell, or is determined by the terminal device from the candidate beam and the non-candidate beam of the target cell), the beam failure recovery request message may include third indication information, the third indication information indicates the at least one available beam. Correspondingly, the source network device may determine the at least one available beam based on the third indication information. Further, the network device may further send a new handover command to the terminal device based on the at least one available beam, to indicate to hand over the terminal device to the target cell by using one or more beams in the at least one available beam.

For example, the manner in which the terminal device performs beam failure recovery in the source cell includes: The terminal device sends first indication information to the source network device, where the first indication information indicates that beam switching fails.

Correspondingly, the source network device may determine, based on the first indication information, that beam switching of the terminal device fails. In this way, the source network device may configure a new beam for the terminal device, so that the terminal device can communicate with the source network device based on the new beam. Alternatively, the source network device may send a new handover command to the terminal device, to indicate to hand over the terminal device to the target cell by using another beam different from the third beam.

For example, that the terminal device sends the first indication information to the source network device includes: The terminal device sends a dedicated scheduling request message to the source network device, where the dedicated scheduling request message includes the first indication information, or the dedicated scheduling request message is equivalent to the first indication information. The dedicated scheduling request message is a scheduling request message that is configured for the terminal device and that is dedicated to reporting the beam switching failure. Correspondingly, after receiving the dedicated scheduling request message, the source network device may determine that beam switching of the terminal device fails.

For another example, that the terminal device sends the first indication information to the source network device includes: The terminal device sends the first indication information to the source network device by using a first resource, where the first resource is configured by the source network device for the terminal device based on the dedicated scheduling request message, or the first resource is a resource preconfigured by the source network device for the terminal device. In other words, after determining that beam switching fails, the terminal device first sends the dedicated scheduling request message to the source network device. Further, the source network device configures the first resource for the terminal device based on the dedicated scheduling request message. Further, the terminal device sends the first indication information to the source network device by using the first resource.

It should be understood that after the terminal device receives the handover command from the source network device, if the terminal device still maintains a connection to the source network device (for example, an intra-cell beam management (inter-cell beam management, ICBM) scenario or an intra-cell multi-transmission point (inter-cell multi TRP, mTRP) scenario), the terminal device may send the first indication information to the source network device.

Optionally, if the terminal device determines at least one available beam in the candidate beam of the target cell, or determines at least one available beam in the target cell, the terminal device may further report the at least one available beam to the source network device by using the first resource. Correspondingly, the network device may send a new handover command to the terminal device based on the at least one available beam, to indicate to hand over the terminal device to the target cell by using one or more beams in the at least one available beam.

For example, that the terminal device performs beam failure recovery in the source cell includes: The terminal device initiates a random access procedure in the source cell by using a contention-based random access (contention based random access, CBRA) resource corresponding to the second reference signal. In a process in which the terminal device performs random access in the source cell, to enable the source network device to identify the terminal device, the terminal device includes, in a message 3 (message 3, Msg3), a cell radio network temporary identifier (cell radio network temporary identity, C-RNTI) or another specified identifier used by the terminal device in the source cell.

The second reference signal is determined based on the signal quality of the at least one reference signal received by the terminal device in the source cell. For example, the second reference signal is a reference signal whose signal quality is not lower than a threshold #4 in the at least one reference signal received by the terminal device from the source network device. The second reference signal may be a synchronization signal block (synchronization signal and PBCH block, SS/PBCH). For another example, the second reference signal is a reference signal with best signal quality in the at least one reference signal received by the terminal device from the source network device.

For example, that the terminal device performs beam failure recovery in the source cell includes: The terminal device sends a beam failure recovery request message to the source network device by using a second resource, where the beam failure recovery request includes indication information #1, and the indication information #1 indicates the first beam.

Correspondingly, the source network device may determine the first beam based on the indication information #1. Further, the source network device may send a beam failure recovery response message to the terminal device by using the first beam. After detecting the beam failure recovery response message from the source network device, the terminal device may continue to communicate with the source network device by using the first beam.

The second resource may be a CBRA resource, a contention-free random access (contention-free random access, CFRA) resource, an SR resource, a PUSCH resource preconfigured by the source network device for the terminal device, or a PUSCH resource of another type.

For example, if no BFR resource associated with the candidate beam of the source cell is configured for the terminal device, or after the terminal device receives the handover command from the source cell, the terminal device does not retain the BFR resource associated with the candidate beam of the source cell, the terminal device may send the beam failure recovery request message to the source network device by using the second resource.

Optionally, if the terminal device determines at least one available beam in the candidate beam of the target cell, or determines at least one available beam in the target cell, after the terminal device performs beam failure recovery in the source cell, the method 300 further includes: The terminal device sends third indication information to the source network device, where the third indication information indicates the at least one available beam. Correspondingly, the network device may determine the at least one available beam based on the third indication information. Further, the source network device may send a new handover command to the terminal device based on the at least one available beam, to indicate to hand over the terminal device to the target cell by using one or more beams in the at least one available beam.

In this embodiment of this application, after the terminal device receives the handover command, if the terminal device determines that beam switching fails, the terminal device may perform beam failure recovery in the source cell, so that the terminal device can resume communication with the source network device in the source cell, thereby reducing a possibility that the terminal device loses an air interface connection due to a handover failure.

With reference to FIG. 4 and FIG. 5, the following describes a beam failure recovery method provided in an embodiment of this application.

As shown in FIG. 4, a terminal device receives an L1/L2 handover command, and the L1/L2 handover command indicates a third beam. In this way, a configuration of a target cell takes effect, and the terminal device periodically sends an SR to a target network device by using the third beam. After a quantity of times that the terminal device fails to send the SR reaches N, the terminal device determines that beam switching fails. Further, the terminal device performs beam failure recovery in a source cell.

As shown in FIG. 5, after the terminal device receives the L1/L2 handover command, the configuration of the target cell takes effect. Further, the terminal device periodically monitors a specified CORESET, or periodically detects a reference signal from the target network device. Further, when the terminal device monitors the specified CORESET, the terminal device does not detect scheduling information from the target network device on the specified CORESET; or when the terminal device detects the reference signal from the target network device, if signal quality of the reference signal is lower than a threshold, the terminal device determines that beam switching fails. Further, the terminal device performs beam failure recovery in the source cell.

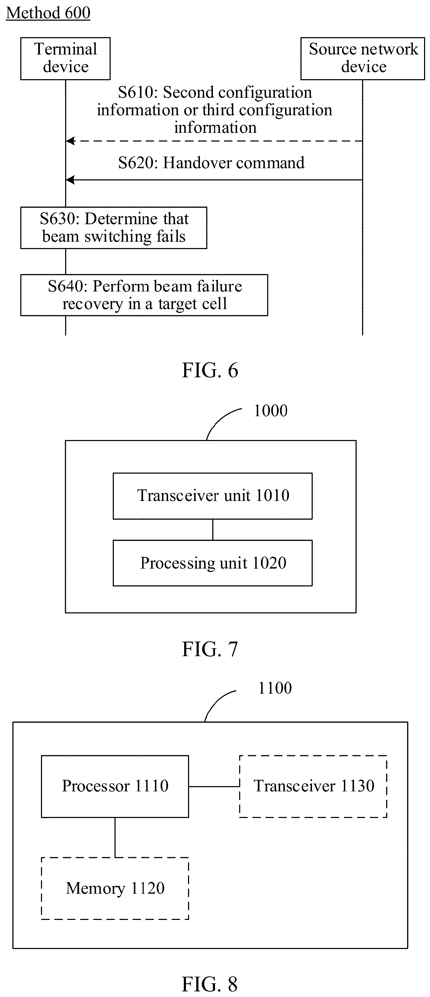

FIG. 6 is a schematic flowchart of a beam failure recovery method according to another embodiment of this application. As shown in FIG. 6, a method 600 may include the following steps.

S610: A source network device sends second configuration information or third configuration information to a terminal device.

Correspondingly, the terminal device receives the second configuration information or the third configuration information from the source network device.

The source network device is a network device to which a source cell belongs, and the source cell is a cell that provides a service for the terminal device before the terminal device is handed over. A target cell is a cell that provides a service for the terminal device after the terminal device is handed over.

The second configuration information is used to configure a beam failure recovery resource of the target cell. The beam failure recovery resource may be a beam failure recovery resource dedicated to uplink failure recovery, and/or a beam failure recovery resource dedicated to downlink failure recovery. In a possible implementation, the second configuration information is included in a cell configuration corresponding to the target cell, for example, CellGroupConfig or ServingCellConfig corresponding to the target cell. Alternatively, in another possible implementation, the second configuration information is included in a cell configuration corresponding to a current serving cell (that is, the source cell).

The third configuration information is used to configure at least one of the following: a candidate beam of the target cell or a beam failure recovery resource associated with the candidate beam of the target cell. The candidate beam of the target cell includes one or more candidate beams. In a possible implementation, the third configuration information is included in a cell configuration corresponding to the target cell, for example, CellGroupConfig or ServingCellConfig corresponding to the target cell. Alternatively, in another possible implementation, the third configuration information is included in a cell configuration corresponding to a current serving cell (that is, the source cell).

It should be noted that S610 is an optional step. For example, if the source network device sends the second configuration information or the third configuration information to the terminal device before the method 600 is performed, S610 may not be performed in the method 600. For another example, if the candidate beam of the target cell is preconfigured in the terminal device, or the beam failure recovery resource of the target cell is preconfigured in the terminal device, S610 may not be performed in the method 600. For still another example, if the source network device determines not to configure the candidate beam of the target cell for the terminal device, or does not configure the beam failure recovery resource of the target cell for the terminal device, S610 may not be performed in the method 600.

S620: The source network device sends a handover command to the terminal device.

Correspondingly, the terminal device receives the handover command from the source network device.

For S620, refer to the description in S320 of the method 300. For brevity, details are not described herein again.

S630: The terminal device determines that beam switching fails.

For S630, refer to the description in S330 of the method 300. For brevity, details are not described herein again.

S640: The terminal device performs beam failure recovery in the target cell.

In a possible implementation, when the terminal device determines that beam switching fails and the candidate beam of the target cell includes at least one available beam, the terminal device performs beam failure recovery in the target cell.

If the terminal device configures or preconfigures the candidate beam of the target cell, after determining that beam switching fails, the terminal device may sequentially first determine whether each candidate beam in the candidate beam of the target cell is available. If the candidate beam of the target cell includes at least one available beam, the terminal device may perform beam failure recovery in the target cell.

In a possible implementation, when the terminal device determines that beam switching fails and there is at least one available beam in the target cell, the terminal device performs beam failure recovery in the target cell. The at least one available beam in the target cell is determined by the terminal device from the candidate beam of the target cell, or may be determined by the terminal device from a non-candidate beam of the target cell, or may be determined by the terminal device from the candidate beam and a non-candidate beam of the target cell.

For example, the terminal device may detect, within predefined time, signal quality of at least one reference signal received from the target network device. If signal quality of one or more of the at least one reference signal is not lower than a threshold #3, the terminal device determines that there is at least one available beam in the target cell. In this way, the terminal device may determine to perform beam failure recovery in the target cell.

In a possible implementation, if the terminal device determines that beam switching fails, and the terminal device configures a beam failure recovery resource associated with the candidate beam of the target cell, or the terminal device configures a beam failure recovery resource associated with the available beam in the target cell, the terminal device performs beam failure recovery in the target cell.

In a possible implementation, when the terminal device determines that beam switching fails and there is no available beam in a candidate beam of the source cell, the terminal device performs beam failure recovery in the target cell.

For a manner in which the terminal device determines that there is no available beam in the candidate beam of the source cell, refer to the manner in which the terminal device determines that there is no available beam in the candidate beam of the target cell in S340.

In a possible implementation, when the terminal device determines that beam switching fails and there is no available beam in the source cell, the terminal device performs beam failure recovery in the target cell.

For a manner in which the terminal device determines that there is no available beam in the source cell, refer to the manner in which the terminal device determines that there is no available beam in the target cell in S340.

The following describes a manner in which the terminal device performs beam failure recovery in the target cell.

For example, that the terminal device performs beam failure recovery in the target cell includes: The terminal device sends the beam failure recovery request message to the target network device by using the beam failure recovery resource of the target cell.

For example, if a beam failure recovery resource dedicated to beam switching failure recovery (for example, the resource is a CFRA resource) is configured for the terminal device, the terminal device may send a beam failure recovery request message (or send a RACH) to the target network device by using the beam failure recovery resource. For example, when the terminal device determines, based on an uplink failure, that beam switching fails, the terminal device may send the RACH to the target network device by using the beam failure recovery resource dedicated to uplink failure recovery, to re-obtain a TA of the target cell and perform uplink synchronization with the target cell.

For another example, if the candidate beam of the target cell is configured for the terminal device, the terminal device may send a beam failure recovery request message to the target network device by using a beam failure recovery resource associated with a second beam. Correspondingly, after receiving the beam failure request message by using the beam failure recovery resource associated with the second beam, the target network device may determine the second beam, and then the target network device may send a beam failure recovery response message to the terminal device by using the second beam. After detecting the beam failure recovery response message from the target network device, the terminal device may communicate with the target network device by using the second beam.

The second beam is an available beam in the candidate beam of the target cell. If the candidate beam of the target cell is configured for the terminal device, the terminal device may determine one or more available beams from the candidate beam of the target cell, and determine the second beam from the one or more available beams.

For example, that the terminal device performs beam failure recovery in the target cell includes: The terminal device initiates a random access procedure in the target cell by using a CBRA resource corresponding to a fifth reference signal.

The fifth reference signal is determined based on the signal quality of the at least one reference signal received by the terminal device in the target cell. For example, the fifth reference signal is a reference signal whose signal quality is not lower than a threshold #4 in the at least one reference signal received by the terminal device from the target network device. The threshold #4 is predefined in a protocol, or is indicated by the source network device to the terminal device. The fifth reference signal may be a synchronization signal block (synchronization signal and PBCH block, SS/PBCH, or SSB for short). For another example, the fifth reference signal is a reference signal with best signal quality in the at least one reference signal received by the terminal device from the target network device.

For example, that the terminal device performs beam failure recovery in the target cell includes: The terminal device sends a beam failure recovery request message to the target network device by using a third resource, where the beam failure recovery request includes indication information #2, and the indication information #2 indicates the second beam.

Correspondingly, the target network device may determine the second beam based on the indication information #2. In this way, the target network device may send the beam failure recovery response message to the terminal device by using the second beam. After detecting the beam failure recovery response message from the target network device, the terminal device may continue to communicate with the target network device by using the second beam.

The third resource may be a CBRA resource, a CFRA resource, an SR resource, a PUSCH resource preconfigured by the target network device or the source network device for the terminal device, or a PUSCH resource of another type.

For example, if no BFR resource associated with the candidate beam of the target cell is configured for the terminal device, the terminal device may send the beam failure recovery request message to the target network device by using the third resource.

In this embodiment of this application, after the terminal device receives the handover command, if the terminal device determines that beam switching fails, and the beam failure recovery resource of the target cell is configured for the terminal device, or the candidate beam of the target cell is configured for the terminal device, the terminal device may perform beam failure recovery in the target cell, thereby improving reliability of cell handover performed by the terminal device, and reducing a possibility that the terminal device loses an air interface connection due to a handover failure.

It may be further understood that some optional features in embodiments of this application may be independent of other features in some scenarios, or may be combined with other features in some scenarios. This is not limited.

It may be further understood that, in some of the foregoing embodiments, sending information is mentioned for a plurality of times. For example, A sends information to B. That A sends information to B may include that A directly sends the information to B, or may include that A sends the information to B through another device or network element. This is not limited.

It may be further understood that, the solutions in embodiments of this application may be appropriately combined for use, and explanations or descriptions of terms in embodiments may be mutually referenced or explained in embodiments. This is not limited.

It may be further understood that in the foregoing method embodiments, the method and the operation implemented by the network element may alternatively be implemented by a constituent component (such as a chip or a circuit) of the network element. This is not limited.

The foregoing describes in detail the methods provided in embodiments of this application with reference to FIG. 3 to FIG. 6. The following describes in detail apparatuses provided in embodiments of this application with reference to FIG. 7 to FIG. 9. It should be understood that descriptions of apparatus embodiments correspond to the descriptions of the method embodiments. Therefore, for content not described in detail, refer to the foregoing method embodiments. For brevity, details are not described herein again.

FIG. 7 is a diagram of a communication apparatus 1000 according to an embodiment of this application. The apparatus 1000 includes a transceiver unit 1010 and a processing unit 1020. The transceiver unit 1010 may be configured to implement a corresponding communication function. The transceiver unit 1010 may also be referred to as a communication interface or a communication unit. Optionally, the transceiver unit 1010 may include a receiving unit and a sending unit. The receiving unit is configured to implement a receiving function, and the sending unit is configured to implement a sending function. The processing unit 1020 may be configured to perform processing, for example, determine that beam switching fails.

Optionally, the apparatus 1000 may further include a storage unit. The storage unit may be configured to store instructions and/or data. The processing unit 1020 may read the instructions and/or the data in the storage unit, so that the apparatus implements the foregoing method embodiments.

In a design, the apparatus 1000 is configured to perform the steps or procedures performed by the device in the foregoing method embodiments, the transceiver unit 1010 is configured to perform receiving and sending-related operations on a device side in the foregoing method embodiments, and the processing unit 1020 is configured to perform processing-related operations on the device side in the foregoing method embodiments.

In a possible implementation, the apparatus 1000 is configured to perform the steps or procedures performed by the terminal device in the embodiment shown in FIG. 3 or FIG. 6. Optionally, the transceiver unit 1010 is configured to receive a handover command from a source network device, where the handover command indicates to hand over the terminal device from a source cell to a target cell; the processing unit 1020 is configured to determine, in a handover process or after being handed over to the target cell, that beam switching fails; and the transceiver unit 1020 is further configured to perform beam failure recovery in the source cell, or perform beam failure recovery in the target cell.

It should be understood that a specific process in which the units perform the foregoing corresponding steps is described in detail in the foregoing method embodiments, and for brevity, details are not described herein.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1000 may be specifically a device (for example, the terminal device or the network device) in the foregoing embodiments, and may be configured to perform the procedures and/or steps corresponding to the device in the foregoing method embodiments. To avoid repetition, details are not described herein again.

The apparatus 1000 in the foregoing solutions has functions of implementing corresponding steps performed by a device (for example, the terminal device or the network device) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 1010 may alternatively be a transceiver circuit (for example, the transceiver circuit may include a receiver circuit and a transmitter circuit), and the processing unit may be a processing circuit.

It should be noted that the apparatus in FIG. 7 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 8 is a diagram of another communication apparatus 1100 according to an embodiment of this application. The apparatus 1100 includes a processor 1110. The processor 1110 is coupled to a memory 1120. The memory 1120 is configured to store a computer program or instructions and/or data. The processor 1110 is configured to execute the computer program or instructions stored in the memory 1120 or read the data stored in the memory 1120 to perform the methods in the foregoing method embodiments.

Optionally, there are one or more processors 1110.

Optionally, there are one or more memories 1120.

Optionally, the memory 1120 and the processor 1110 are integrated together or separately disposed.

Optionally, as shown in FIG. 8, the apparatus 1100 further includes a transceiver 1130. The transceiver 1130 is configured to receive and/or send a signal. For example, the processor 1110 is configured to control the transceiver 1130 to receive and/or send the signal. Optionally, the transceiver 1130 may include a receiver and a transmitter. The receiver is configured to receive a signal, and the transmitter is configured to send a signal.

For example, the processor 1110 may have a function of the processing unit 1020 shown in FIG. 7, the memory 1120 may have a function of the storage unit, and the transceiver 1130 may have a function of the transceiver unit 1010 shown in FIG. 7.

In a solution, the apparatus 1100 is configured to implement an operation performed by a device (for example, the terminal device or the network device) in the foregoing method embodiments.

For example, the processor 1110 is configured to execute the computer program or instructions stored in the memory 1120, to implement related operations of the device (for example, the terminal device or the network device) in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example rather than a limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

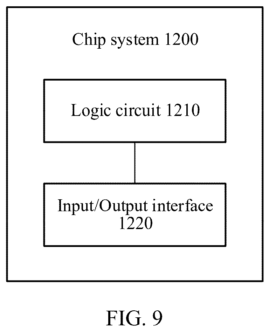

FIG. 9 is a diagram of a chip system 1200 according to an embodiment of this application. The chip system 1200 (may also be referred to as a processing system) includes a logic circuit 1210 and an input/output interface (input/output interface) 1220.

The logic circuit 1210 may be a processing circuit in the chip system 1200. The logic circuit 1210 may be coupled to and connected to a storage unit, and invoke instructions in the storage unit, so that the chip system 1200 implements the methods and functions in embodiments of this application. The input/output interface 1220 may be an input/output circuit in the chip system 1200, and outputs information processed by the chip system 1200, or inputs to-be-processed data or signaling information to the chip system 1200 for processing.

Specifically, for example, if the chip system 1200 is installed on a terminal device, the logic circuit 1210 is coupled to the input/output interface 1220, and the input/output interface 1220 may input a handover command to the logic circuit 1210 for processing. For another example, if the chip system 1200 is installed on a network device, the logic circuit 1210 is coupled to the input/output interface 1220, and the input/output interface 1220 may output a handover command to a terminal device.

In a solution, the chip system 1200 is configured to implement an operation performed by a device (for example, the terminal device or the network device) in the foregoing method embodiments.

For example, the logic circuit 1210 is configured to implement processing-related operations performed by the device (for example, the terminal device or the network device) in the foregoing method embodiments, and the input/output interface 1220 is configured to implement receiving and sending-related operations performed by the device (for example, the terminal device or the network device) in the foregoing method embodiments.

An embodiment of this application further provides a computer-readable storage medium. The computer-readable storage medium stores computer instructions for implementing a method performed by a device (for example, the terminal device or the network device) in the foregoing method embodiments.

For example, when a computer program is executed by a computer, the computer is enabled to implement the method performed by the device (for example, the terminal device or the network device) in the foregoing method embodiments.

An embodiment of this application further provides a computer program product, including instructions. When the instructions are executed by a computer, a method performed by a device (for example, the terminal device or the network device) in the foregoing method embodiments is implemented.

An embodiment of this application further provides a communication system. The communication system includes the terminal device and the network device in the foregoing embodiments. For example, the system includes the terminal device and the network device in the embodiment shown in FIG. 3 or FIG. 6.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A beam failure recovery method, comprising:
receiving, by a terminal device, a handover command from a source network device, wherein the handover command indicates to hand over the terminal device from a source cell to a target cell;
determining, by the terminal device in a handover process or after being handed over to the target cell, that beam switching fails; and
performing, by the terminal device, beam failure recovery in the source cell, or performing, by the terminal device, beam failure recovery in the target cell.

2. The method according to claim 1, wherein determining, by the terminal device, that beam switching fails comprises:
determining, by the terminal device based on an uplink failure, that beam switching fails; or
determining, by the terminal device based on a downlink failure, that beam switching fails.

3. The method according to claim 2, wherein determining, by the terminal device based on the uplink failure, that beam switching fails comprises:
if a quantity of times that the terminal device fails to send a scheduling request message to a target network device reaches N, determining, by the terminal device, that beam switching fails, wherein N is a positive integer; or
if a quantity of times that the terminal device fails to send uplink data to a target network device reaches M, determining, by the terminal device, that beam switching fails, wherein M is a positive integer.

4. The method according to claim 2, wherein determining, by the terminal device based on the downlink failure, that beam switching fails comprises:
if the terminal device receives no scheduling information from a target network device within first duration, determining, by the terminal device, that beam switching fails; or
if the handover command indicates a first reference signal, and the terminal device detects the first reference signal to determine that signal quality of the first reference signal is lower than a first threshold, or a quantity of times that the terminal device detects the first reference signal for a plurality of times to determine that signal quality of the first reference signal is lower than a first threshold reaches K, determining, by the terminal device, that beam switching fails, wherein K is a positive integer.

5. The method according to any one of claims 1 to 4, wherein performing, by the terminal device, beam failure recovery in the source cell comprises:
sending, by the terminal device, a beam failure recovery request message to the source network device by using a beam failure recovery resource associated with a first beam, wherein the first beam is an available beam in a candidate beam of the source cell; or
sending, by the terminal device, first indication information to the source network device, wherein the first indication information indicates that beam switching fails; or
initiating, by the terminal device, a random access procedure in the source cell by using a contention-based random access CBRA resource corresponding to a second reference signal, wherein the second reference signal is determined based on signal quality of at least one reference signal received by the terminal device in the source cell.

6. The method according to claim 5, wherein the beam failure recovery request message comprises second indication information, and the second indication information indicates an uplink sending failure or a downlink receiving failure.

7. The method according to claim 5, wherein sending, by the terminal device, the first indication information to the source network device comprises:
sending, by the terminal device, a dedicated scheduling request message to the source network device, wherein the dedicated scheduling request message comprises the first indication information; or
sending, by the terminal device, the first indication information to the source network device by using a first resource, wherein the first resource is configured by the source network device for the terminal device based on a dedicated scheduling request message.

8. The method according to claim 7, wherein the first resource is further used to report at least one available beam in the target cell; and the method further comprises:
determining, by the terminal device, at least one available beam in a candidate beam of the target cell, or determining, by the terminal device, the at least one available beam in the target cell.

9. The method according to any one of claims 5 to 8, wherein before performing, by the terminal device, beam failure recovery in the source cell, the method further comprises:
determining, by the terminal device, that there is no available beam in the candidate beam of the target cell, or determining, by the terminal device, that there is no available beam in the target cell.

10. The method according to any one of claims 5 to 8, wherein before performing, by the terminal device, beam failure recovery in the source cell, the method further comprises:
determining, by the terminal device, at least one available beam in a candidate beam of the target cell, or determining, by the terminal device, the at least one available beam in the target cell; and
after performing, by the terminal device, beam failure recovery in the source cell, the method further comprises:
sending, by the terminal device, third indication information to the source network device, wherein the third indication information indicates the at least one available beam.

11. The method according to any one of claims 8 to 10, wherein the method further comprises:
receiving, by the terminal device, first configuration information from the source network device, wherein the first configuration information is used to configure the candidate beam of the target cell.

12. The method according to any one of claims 1 to 5, wherein performing, by the terminal device, beam failure recovery in the target cell comprises:
sending, by the terminal device, a beam recovery request message to the target network device by using a beam failure recovery resource of the target cell.

13. The method according to claim 12, wherein the beam failure recovery resource of the target cell is associated with a second beam, and the second beam is an available beam in a candidate beam of the target cell, or the second beam is an available beam in the target cell.

14. The method according to claim 13, wherein the method further comprises:
receiving, by the terminal device, third configuration information from the source network device, wherein the third configuration information is used to configure at least one of the following: the candidate beam of the target cell or a beam failure recovery resource associated with the candidate beam of the target cell.

15. The method according to any one of claims 12 to 14, wherein the method further comprises:
receiving, by the terminal device, second configuration information from the source network device, wherein the second configuration information is used to configure the beam failure recovery resource of the target cell.

16. The method according to any one of claims 1 to 15, wherein the handover command indicates the terminal device to communicate with the target cell by using a third beam after being handed over from the source cell to the target cell.

17. A communication apparatus, comprising a processor, configured to execute a computer program or instructions stored in a memory, so that the communication apparatus performs the method according to any one of claims 1 to 16.

18. The communication apparatus according to claim 17, wherein the communication apparatus further comprises the memory, configured to store the computer program or instructions.

19. A computer-readable storage medium, wherein the computer-readable storage medium stores a computer program or instructions, and when the computer program or instructions are executed by a communication apparatus, the method according to any one of claims 1 to 16 is performed.

20. A chip system, comprising a processor, configured to invoke a computer program or instructions from a memory and run the computer program or instructions, so that a communication apparatus in which the chip system is installed implements the method according to any one of claims 1 to 16.

21. A communication system, comprising a terminal device and a source network device, or comprising a terminal device and a target network device, wherein the terminal device is configured to perform the method according to any one of claims 1 to 16, the source network device is configured to communicate with the terminal device after the terminal device performs beam failure recovery in a source cell, and the target network device is configured to communicate with the terminal device after the terminal device performs beam failure recovery in a target cell.
